Europäisches Patentamt

European Patent Office

Office européen des brevets

(11) Veröffentlichungsnummer: **0 375 608**
**A1**

## EUROPÄISCHE PATENTANMELDUNG

(21) Anmeldenummer: 89810914.5

(22) Anmeldetag: 04.12.89

(51) Int. Cl.5: **F16L 11/12, F16L 59/153**

(30) Priorität: 11.12.88 CH 4566/88

(43) Veröffentlichungstag der Anmeldung:
**27.06.90 Patentblatt 90/26**

(84) Benannte Vertragsstaaten:
**AT BE CH DE ES FR GB IT LI LU NL SE**

(71) Anmelder: **"BRUGG"-KABEL AG**
**Klosterzelgstrasse 28**
**CH-5200 Brugg(CH)**

(72) Erfinder: **Aaserud, Jostein**
**Schlattstrasse 16**
**CH-5304 Endingen(CH)**

(74) Vertreter: **Breiter, Heinz**
**Patentanwalt H. Breiter AG**
**Schaffhauserstrasse 27 Postfach 1163**
**CH-8401 Winterthur(CH)**

(54) **Flexibles Medientransportrohr.**

(57) Im Verbundrohr werden einen Temperaturunterschied zur Umgebung aufweisende Flüssigkeiten und/oder Gase transportiert. Ein Innenrohr (12) aus einem thermoplastischen Kunststoff mit hoher Wärmebeständigkeit ist mit einer aussenliegenden Metallfolie (14) mit längslaufend oder spiralförmig überlappenden Bandkanten (16), welche als Permeationssperre dient, verbunden.

Die Metallfolie (14) ist vollflächig mit dem Innenrohr (12) verklebt oder verschweisst. Ein flexibler Kleber gleicht in einem Temperaturbereich oberhalb etwa 70° C die Expanions-und Kontraktionsbewegungen des Innenrohrs (12) durch visko-elastische Verformung ohne nennenswerte Belastung des Metalls aus. Dabei bleibt die vollflächige Adhäsion des Klebers (24) auch im Ueberlappungsbereich (17) der Metallfolie (14) ohne Bildung von Zwischenräumen aufrecht erhalten.

Fig.1

# Flexibles Medientransportrohr

Die Erfindung bezieht sich auf ein flexibles Medientransportrohr für einen Temperaturunterschied zur Umgebung aufweisende Flüssigkeiten und/oder Gase, welches ein Innenrohr aus einem thermoplastischen Kunststoff mit hoher Wärmebeständigkeit umfasst, das mit einer aussenliegenden Metallfolie mit längslaufend oder spiralförmig überlappenden Bandkanten als Permeationssperre verbunden ist.

Flexible Medientransportrohre aus Kunststoff haben den Nachteil, dass sie gegenüber Gasen mit kleinen Molekülen permeabel sind. Die treibende Kraft der Permeation ist der Unterschied des Partialdrucks der als Permeanten bezeichneten betreffenden Komponenten zwischen der Innen- und Aussenseite des Rohres. Falls die betreffenden Moleküle genügend klein sind, findet eine temperaturabhängige Permeation durch das Innenrohr statt. Die Auswirkungen der Permeation sind abhängig vom Permeanten, der Menge und dem Ansammlungsort. Neben sich neutral verhaltenden Permeanten, wie beispielsweise Wasserstoff, gibt es auch solche, die eine unerwünschte Auswirkung zeigen:
- In wasserführenden isolierten Leitungen diffundiert Wasserdampf durch das Innenrohr und gelangt in die Isolationsschicht. Feuchte Isolationsmaterialien verlieren drastisch an Isolationswert. Analog können Sauerstoffmoleküle mittels Permeation von aussen nach innen in das durchfliessende Wasser gelangen und dieses an Sauerstoff anreichern. Dies fördert bei Stahlteilen, z.B. einem Radiator im gleichen Rohrsystem, die Korrosion und führt ausserdem zu einer vorzeitigen Alterung des Kunststoffrohrs.
- Bei wasserführenden, nichtisolierten Leitungen spielt die Permeation von Wasser von innen nach aussen keine bedeu tende Rolle, hingegen wirkt sich das Eindiffundieren von Sauerstoff, wie vorstehend erwähnt, nachteilig aus.

Diese Nachteile von flexiblen Medientransportrohren sind mit eingelegten Metallfolien zu beheben versucht worden. So beschreibt z.B. die EP-A1 0 084 088 ein flexibles Fernwärmeleitungs - Verbundrohr mit einem das Medium leitenden Innenrohr aus zwei konzentrischen Kunststoffschichten, zwischen welchen eine dünne Metallfolie als Diffusions-bzw. Permeationssperre angeordnet ist. Die die Metallfolie einlaminierende äussere Kunststoffschicht ist zusätzlich von einer als Armierung wirkenden Druckbandage umwickelt.

Folgende Probleme bzw. Schwächen wurden bei solchen Konstruktionen festgestellt:
- Bei durch betriebsbedingte Temperatur- und Druckwechsel wiederholten Expansions- und Kontraktionsbewegungen des Rohres tritt/treten Delaminierung und/oder Rissbildung der Metallfolie auf. Eine Delaminierung öffnet Hohlräume für schädigende Einflüsse durch eindiffundierende Permeanten. Dieses Problem entsteht, weil Metallfolien und Kunststoffschichten unterschiedliche Ausdehnungs-Koeffizienten und Elastizitätsmodule besitzen. Nur wenn die Festigkeit der Metallfolie durch geeignete Wahl von Material und Dicke genau auf diejenige der Kunststoffschichten abgestimmt wird, kann die Metallfolie die Expansions- und Kontraktionsbewegungen des Kunststoffrohres ohne Delaminierung und/oder Rissbildung mitmachen. Eine Druckbandage, bestehend aus hochfesten Fasern, kann die Delaminierungsgefahr nur reduzieren, nicht aber eliminieren.
- Das mehrschichtig extrudierte Medienrohr ist dikker als die normierten Kunststoffrohre und bedingt dadurch handelsübliche Verbindungsteile.
- Durch die Dicke verliert das Medienrohr an Flexibilität und hat ein höheres Gewicht, wodurch die Handlichkeit wesentlich beeinträchtigt ist.
- Die vielen Arbeitsgänge, eingeschlossen eine zweifache Extrusion, ergeben ein teures Medienrohr.

Die DE-A1 34 36 774 beschreibt ein flexibles Medientransportrohr aus zwei konzentrisch zueinander angeordneten Rohren. Im durch geeignete Abstandshalter gebildete Ringraum zwischen den beiden Rohren wird ein vom Normaldruck abweichender Druck aufrechterhalten. Der Ringraum ist sowohl nach aussen als auch nach innen durch eine jeweils mit dem Innen- und Aussenrohr verklebte Metallfolie gasdiffusionsdicht abgeschlossen. Die Metallfolie ist, innen und aussen, zwischen zwei Kunststoffrohren verklebt. Es ist nicht ersichtlich, wie das Problem der verschiedenen Wärmedehnung zwischen dem Kunststoff und dem Metall gelöst wird. Die DE-A1 34 36 774 macht ebenfalls zahlreiche Arbeitsgänge erforderlich und weist bezüglich der Rohrdicke dieselben Nachteile wie die vorstehend diskutierte Druckschrift auf.

Eine weit weniger aufwendige, die Flexibilität des Medientransportrohres nicht beeinträchtigende Lösung wird in der EP-A1 0 296 105 vorgeschlagen. Die Permeationssperre besteht aus einer ohne Zwischenraum mit dem thermoplastischen Kunststoffrohr verschweissten oder verklebten, superplastischen Verbundfolie, welche eine Kernschicht aus einer duktilen Metallfolie mit geringen Festigkeitswerten und beidseits vollflächig aufgebrachte Deckflächen aus Kunststoff aufweist. Diese Verbundfolie folgt den Expansions-und Kontraktionsbewegungen des Kunststoffrohrs ohne Ausbildung von Zwischenräumen. Eine Metall-Kunststoff-Verbundfolie wird als superplastisch bezeichnet, wenn die Metallfolie ihre metallischen Dehnungseigenschaften verliert und die gesamte Verbundfolie das Dehnungsverhalten der Kunststoffdeckschichten annimmt.

Aus der EP-A1 0 270 347 ist ein flexibles Medientransportrohr bekannt, welches eine Metallfolie umfasst, die auf wenigstens einer Seite von einem Kleber beschichtet ist. Dieser Kleber besteht aus einem Thermoplasten der Gruppe der Säure-Copolymere und weist eine reaktive Carboxylgruppe auf. Es ist nicht ersichtlich, wie eine Delaminierung bzw. Rissbildung des Metallbandes bei erhöhter Temperatur vermieden werden soll.

Der Erfinder hat sich die Aufgabe gestellt, ein flexibles Medientransportrohr der eingangs genannten Art zu schaffen, welches die Verwendung üblicher, auch im Handel erhältlicher Metallfolien zur Herstellung einer nicht delaminierenden, rissfreien Permeationssperre erlaubt, aber dennoch in wenigen Arbeitsgängen einfach und kostengünstig herstellbar ist. Das Medientransportrohr soll einen geringen Durchmesser aufweisen, der den Einsatz von Normverbindungsteilen erlaubt, und in bezug auf die verschiedenen Dilatationskoeffizienten im Innenrohr bei erhöhter Temperatur eine grosse Beweglichkeit haben.

Die Aufgabe wird erfindungegemäss dadurch gelöst, dass die Metallfolie vollflächig mit dem Innenrohr verklebt oder verschweisst ist, und ein flexibler Kleber in einem Temperaturbereich oberhalb etwa 70°C die Expansions- und Kontraktionsbewegungen des Innenrohrs durch visko-elastische Verformung ohne nennenswerte Belastung des Metalls ausgleicht, wobei die vollflächige Adhäsion des Klebers auch im Ueberlappungsbereich der Metallfolie ohne Bildung von Zwischenräumen aufrecht erhalten bleibt.

Die erfindungsgemäss verwendeten Metallfolien haben vorzugsweise eine Dicke von 0,05 - 0,5 mm, insbesondere 0,1 -0,25 mm. Dieser Dickenbereich umfasst also auch metallische Dünnbänder, einfachheitshalber wird jedoch die Bezeichnung Metallfolie auch für die oberen, angegebenen Dickenbereiche verwendet. Sie besteht bevorzugt aus Aluminium, Kupfer oder Blei, bzw. einer Legierung dieser Metalle, oder rostfreiem Stahl.

Bei einem flexiblen Medientransportrohr mit das Innenrohr umgebender Metallfolie führt der einzige Weg für die Permeanten durch den Ueberlappungsbereich der Bandkanten. Die erfindungsgemäss vollflächige Verklebung oder Verschweissung der Metallfolie mit dem Innenrohr ist von wesentlicher Bedeutung. So kann sich zwischen Innenrohr und Metallfolie keine Wasseransammlung bilden, welche vorerst in den Ueberlappungsbereich und dann allmählich durch den verhältnismässig langen Weg im Kleber zwischen den Bandkanten entweicht. Für eindringenden Sauerstoff beispielsse gilt sinngemäss dasselbe. Der Kleber muss also auch gegenüber der Metallfolie eine grosse, dauerhafte Adhäsion aufweisen.

Für das mediumführende Innenrohr bieten sich in erster Linie vernetzter Polyäthylen hoher Dichte und Polybuten an, welche bei hohen Temperaturen gute Festigkeitseigenschaften aufweisen. Es sind jedoch auch Polypropen, Perfluoräthylenpropen, Polyvinylidenfluorid, nachchloriertes Polyvinylchlorid oder Polysulfon geeignet.

An den gleichmässig zwischen der Metallfolie und dem Innenrohr bzw. im Ueberlappungsbereich zwischen den Bandkanten angeordneten Kleber werden folgende Anforderungen gestellt:
- Viskoelastizität oberhalb etwa 70°C
- Mit dem Innenrohr aus einem thermoplastischen Kunststoff und der Metallfolie gut verklebbar und chemisch verträglich
- Unempfindlich gegen Permeanten
- In einem breiten Temperaturbereich, beispielsweise 0 -90°C, elastisch verformbar.

In einem höheren Temperaturbereich oberhalb etwa 70°C erlaubt der Kleber eine visko-elastische Verformung und gleicht so die Expansions- oder Kontraktionsbewegungen des Innenrohrs ohne nennenswerte Belastung des Metalls aus. In der Praxis ist die erfindungsgemässe visko-elastische Verformung, vor allem im Temperaturbereich von 70 - 95°C, von wesentlicher Bedeutung, weil hier die Expansions- bzw. Kontraktionsbewegungen am grössten sind. Der Kleber wird z.B. mit einer Schichtdicke von 0,03 - 0,1 mm aufgetragen.

Die erwähnten Anforderungen an den Kleber werden beispielsweise durch Thermoplasten der Gruppe der Copolymere, insbesondere aus einem Aethylen-Acrylsäure-Copolymerisat, erfüllt.

Zur Herstellung des flexiblen Medientransportrohrs wird die Metallfolie in an sich bekannter Weise längslaufend oder spiralförmig satt aufliegend aufgebracht, wobei die Bandkanten überlappen. Innenseitig ist die Metallfolie mit einer Kleberschicht versehen, die durch Wärmezufuhr aktiviert und dann mit dem Innenrohr verklebt oder auch ohne Wärmezufuhr aufgeklebt werden kann. Nach einer Variante werden eine blanke Metallfolie und eine Siegelfolie separat aufgebracht und gleichzeitig oder später Wärme zum Verkleben bzw. versiegeln zugeführt.

Die Applizierung erfolgt vorzugsweise in einem Durchlaufofen bekannter Bauart.

Der Wärmeeintrag kann nach einer ersten Variante mittels einer aufgespritzten oder aufextrudierten flächendeckenden heissen Masse erfolgen, welche beispielsweise aus Polyäthylen besteht. Wenn der Kleber verschmolzen und das Verbundrohr abgekühlt ist, kann die aufgebrachte Masse aufgeschlitzt und wieder von der Metallfolie abgezogen werden. Die zum Wärmeeintrag verwendete Masse ist nach einer Granulierung wieder verwendbar.

Der Wärmeeintrag kann auch durch das zu Beginn transpor tierte Medium erfolgen. In diesem Fall sind keine anderen Wärmequellen notwendig.

Das erfindungsgemässe flexible Medientransportrohr hat, nicht abschliessend aufgezählt, folgende Verwendungsmöglichkeiten:

1. Transport von flüssigen Medien in isolierten Rohren, mit einem Temperaturunterschied zwischen dem Medium und der Umgebungstemperatur, wobei ein möglichst kleiner Wärmeaustausch stattfindet, z.B. Fernwärmeleitungen, Trinkwasserleitungen, Brauchwasserleitungen und Kühlleitungen.

2. Transport von flüssigen Medien in nicht isolierten Rohren mit einem Temperaturunterschied vom Medium zur Umgebung, wobei ein möglichst grosser Wärmeaustausch mit der Umgebung stattfindet, z.B. Fussbodenheizungsrohre und Erdwärmeleitungen. Die auf der Aussenseite eines medienführenden Innenrohrs aufgebrachte Metallfolie kann mit einem wenig isolierenden, dünnen Aussenmantel abgedeckt sein.

Das erfindungsgemässe flexible Medientransportrohr für Flüssigkeiten und/oder Gase weist gegenüber bekannten Ausbildungsformen bedeutende Vorteile auf:

- Die vollflächig auf das thermoplastische Innenrohr geklebte oder verschweisste Metallfolie mit einem flexiblen, oberhalb 70° C visko-elastisch verformbaren Kleber erlaubt nicht nur eine ausserhalb des Ueberlappungsbereichs vollständig undurchlässige, temperaturunabhängige Permeationssperre, sondern vermindert die bisher stets inhärente Gefahr des Delaminierens und/oder der Rissbildung auf ein vernachlässigbares Minimum. Die Eigenschaften des Klebers erlauben, dass die Metallfolie den Expansions- und Kontraktionsbewegungen des Innen rohrs stets folgen kann, ohne dass der geringste Zwischenraum gebildet oder das Metall nennenswert beansprucht wird. Deshalb können sich keine diffundierten, sich schädlich auswirkenden Medien sammeln.

- Es muss keine Metallfolie mit speziellen Eigenschaften verwendet werden.

- Es sind keine Druckbandagen oder dgl. notwendig.

- Als Permeationssperre kann eine dünne Metallfolie aufgebracht werden, welche die Flexibilität des Rohres und dessen Handlichkeit nur unbedeutend vermindert und auf das Rohrgewicht pro Laufmeter praktisch keinen Einfluss hat.

- Die elastische Verformbarkeit des Klebers nimmt mit steigender Temperatur zu, in etwa gleichem Masse wie sich das Innenrohr ausdehnt. Bei stark ausgedehntem Innenrohr, bei hohen Temperaturen, ist der Kleber viskoelastisch.

- Die geringe Dicke der Medientransportrohre erlaubt die Verwendung von handelsüblichen Kunststoffrohrverbindungen.

Die Erfindung wird anhand der in der Zeichnung dargestellten Ausführungsbeispiele näher erläutert. Es zeigen schematisch:

- Fig. 1 eine aufgeschnittene perspektivische Ansicht eines isolierten flexiblen Medientransportrohrs,

- Fig. 2 einen Teilschnitt durch einen Ueberlappungsbereich einer Metallfolie,

- Fig. 3 den Ueberlappungsbereich von Fig. 2, in expan diertem Zustand,

- Fig. 4 einen Teilschnitt durch eine mit einem längslaufenden Folienband abgedeckte Ueberlappung, und

- Fig. 5 einen Schnitt durch ein nicht isoliertes Medientransportrohr mit einer zweiten Metallfolie.

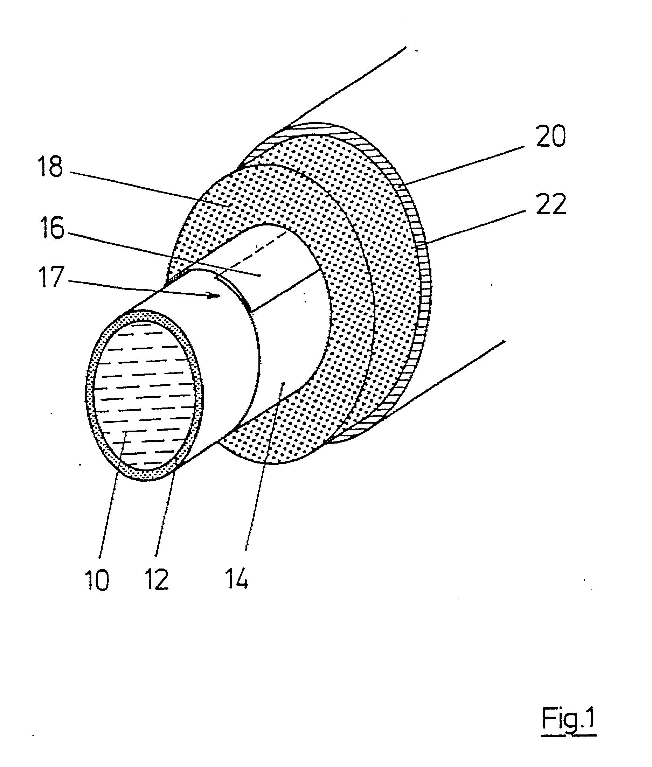

In Fig. 1 wird ein mit 95° C heissem Wasser 10 gefülltes Innenrohr 12 gezeigt, welches aus vernetztem Polyäthylen besteht. Auf die Aussenseite dieses Kunststoffrohrs ist längslaufend eine Metallfolie 14 mit einer innen- und aussenliegenden Kleberschicht aufgezogen und mit dem Innenrohr 12 versiegelt, wobei die Bandkanten 16 der Metallfolie 14 einen Ueberlappungsbereich bilden, in welchem die Metallfolie 14 dicht versiegelt oder verklebt wird. Das thermoplastische Innenrohr 12 mit der Metallfolie 14 bilden das erfindungsgemässe flexible Medientransportrohr.

Das Medientransportrohr gemäss Fig. 1 wird als Fernwärmeleitungsrohr eingesetzt. Die Permeationssperre aus der Metallfolie 14 ist deshalb von einer koaxial ausgebildeten thermischen Isolation 18 umgeben. Diese besteht im vorliegenden Fall aus einem geschlossenporigen Polyurethanschaum, sie kann jedoch auch aus einem Polyäthylenschaum, einem vernetzten Polyäthylenschaum, Polyisocyanuratschaum, Mineralwolle oder Glaswolle bestehen.

Ein Aussenmantel 20 aus Kunststoff mit einer glatten oder gewellten Oberfläche und einer innenliegenden Aluminiumfolie 22 oder einem nicht gezeichneten, innenliegenden, gewellten Metallrohr schützt das Fernwärmeleitungsrohr. Der Aussenmantel besteht aus Polyäthylen geringer Dichte oder Polyvinylchlorid.

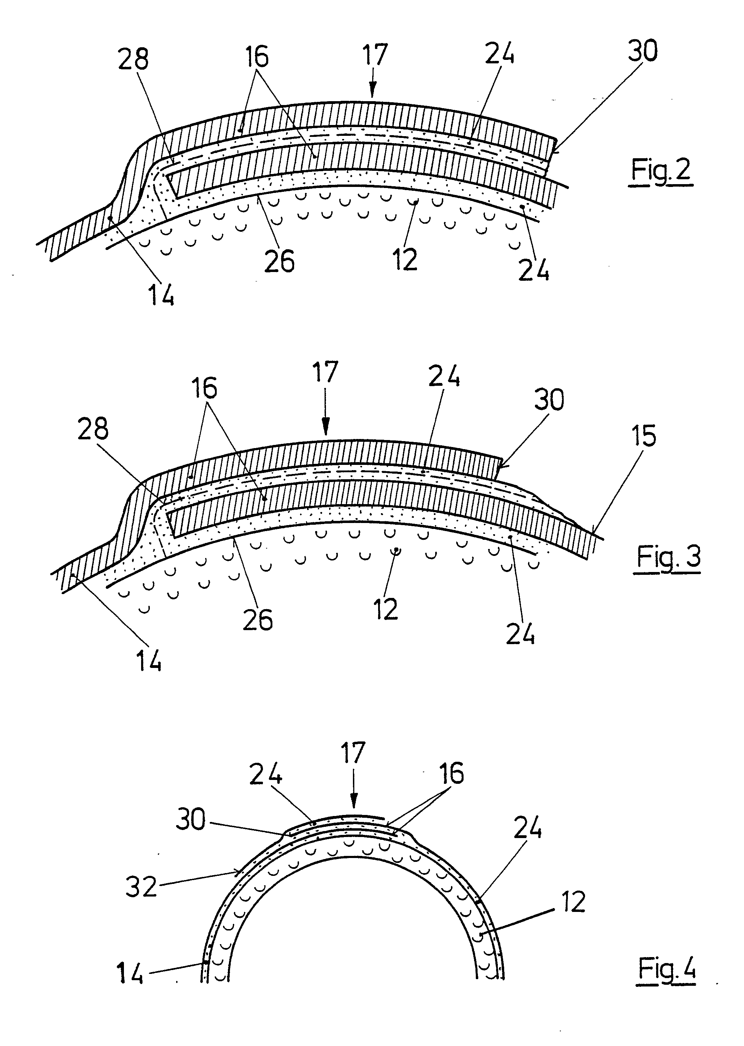

Fig. 2 zeigt einen Ueberlappungsbereich eines Transportrohrs mit einem nur wenig von der Raumtemperatur abweichen den Medium. Der Kleber 24 ist etwa bündig mit dem aussenliegenden Rand 30 der Metallfolie 14.

In diesem Temperaturbereich ist die Relativbewegung zwischen dem Innenrohr 12 und der Metallfolie 14 nur verhältnismässig klein. Dies ist in guter Uebereinstimmung mit der geringeren Elastizität des Klebers 24 bei niederen Temperaturen.

Mit einer gestrichelten Linie 28 ist der einzig mögliche Weg zum Entweichen von Feuchtigkeit eingezeichnet. Der verhältnismässig lange Weg gewährleistet, dass nur sehr wenig Feuchtigkeit austreten bzw. z.B. nur sehr wenig Sauerstoff eindringen kann.

Im vorliegenden Fall besteht das Innenrohr 12 aus vernetztem Polyäthylen, die Metallfolie 14 aus einer Aluminiumlegierung und der Kleber 24 aus einem Aethylen-Acrylsäure-Copolymerisat. Die Metallfolie 14 ist 0,2 mm dick, die Kleberschicht etwa 0,07 mm.

Der in Fig. 3 gezeigte Bereich mit überlappenden Bandkanten 16 der Metallfolie 14 stellt den expandierten Zustand dar. Das Innenrohr 12 ist vom durchfliessenden Medium von 90° C erhitzt, die Metallfolie 14 hat sich ebenfalls ausgedehnt. Das Innenrohr 12 und die Metallfolie 14 haben jedoch nicht den gleichen Ausdehnungskoeffizienten, das Metall dilatiert weniger stark als der Kunststoff. Dadurch entsteht zwischen der Metallfolie 14 und der Oberfläche 26 des Innenrohrs 12 eine Relativbewegung in tangentialer Richtung. Der Kleber 24 kann diese Bewegung durch elastische Dehnung auffangen.

Wegen der Expansion des thermoplastischen Innenrohrs 12, welcher die Metallfolie 14 nicht folgen kann, wird der Ueberlappungsbereich 17 schmaler. Am aussenseitigen Rand 30 der Metallfolie 14 ist die visko-elastische Verformung des Klebers 24 sichtbar. Trotz der starken Verformung löst sich der Kleber jedoch nicht von der Oberfläche 15 der Metallfläche 14. Zur besseren Veranschaulichung ist die Dehnung übertrieben gezeichnet.

Fig. 4 zeigt ein thermoplastisches Innenrohr 12, welches mit einer Metallfolie 14 abgedichtet ist. Im Ueberlappungsbereich 17 der Metallfolie 14 kann ein sehr kleiner Teil der Feuchtigkeit zwischen den beiden Bandkanten 16 entweichen. Diese tritt beim Rand 30 der Metallfolie 14 aus. Die Feuchtigkeitsverluste können noch weiter minimalisiert werden, wenn ein längslaufendes Folienband 32 den Bereich des Rands 30 abdeckt. Zweckmässig besteht diese Folie aus dem gleichen Material wie das Metallband 14 und ist mit demselben Kleber 24 aufgebracht. Anstelle der Anordnung eines Folienbandes 32 kann die Ueberlappung der Bandkanten 16 der Metallfolie 14 entsprechend verlängert werden.

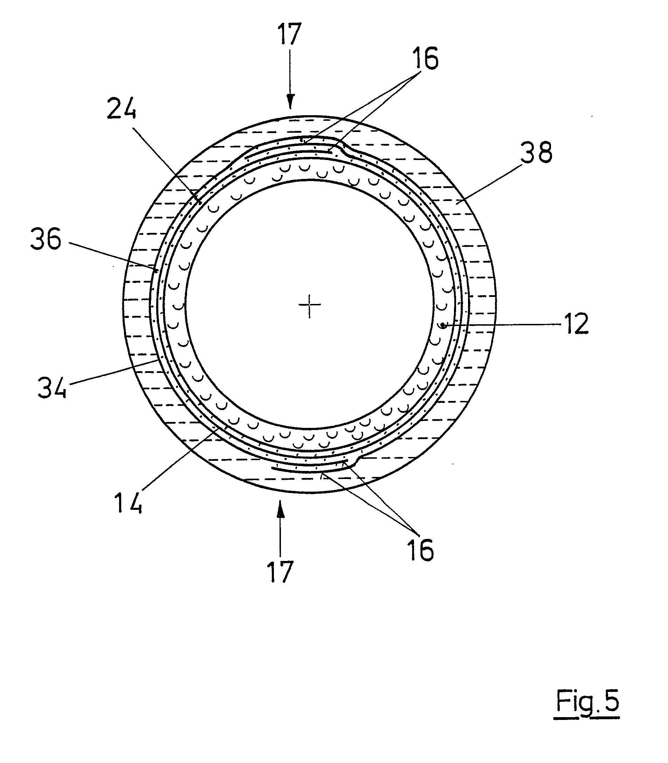

Fig. 5 zeigt eine Variante mit einem inneren Metallband 14 und einem äusseren Metallband 34. Der Kleber 24 des inneren Metallbands 14 und der Kleber 36 des äusseren Metallbands 34 sind dieselben. Die Ueberlappungsbereiche 17 des inneren und äusseren Metallfolien 14, 34 mit den Bandkanten 16 liegen einander diametral gegenüber. Eine wenig isolierende, dünne Aussenschicht 38, vorzugsweise aus Kunststoff, schützt die Metallfolien 14, 34.

Feuchtigkeit müsste, um austreten zu können, zuerst den oberen Ueberlappungsbereich 17 durchdringen, wo jedoch die äussere Metallfolie 34 geschlossen ist. Die Feuchtigkeit müsste also durch den Kleber 36 zwischen den beiden Metallfolien 14, 34 bis zum unteren Ueberlappungsbereich 17 migrieren, wo die Bandkanten 16 der äusseren Metallfolie 34 überlappen. Dort kann keine Feuchtigkeit direkt aus dem Innenrohr 12 austreten, weil die innere Metallfolie 14 geschlossen ist. Die Anordnung gemäss Fig. 5 verhindert also jeden Feuchtigkeitsaustritt oder entsprechend jeden Sauerstoffeintritt.

## Ansprüche

1. Flexibles Medientransportrohr für einen Temperaturunterschied zur Umgebung aufweisende Flüssigkeiten und/oder Gase, welches ein Innenrohr (12) aus einem thermoplastischen Kunststoff mit hoher Wärmebeständigkeit umfasst, das mit einer aussenliegenden Metallfolie (14) mit längslaufend oder spiralförmig überlappenden Bandkanten (16) als Permeationssperre verbunden ist,
dadurch gekennzeichnet, dass
die Metallfolie (14) vollflächig mit dem Innenrohr (12) verklebt oder verschweisst ist, und ein flexibler Kleber (24) in einem Temperaturbereich· oberhalb etwa 70° C die Expansions- und Kontraktionsbewegungen des Innenrohrs (12) durch visko-elastische Verformung ohne nennenswerte Belastung des Metalls ausgleicht, wobei die vollflächige Adhäsion des Klebers (24) auch im Ueberlappungsbereich (17) der Metallfolie (14) ohne Bildung von Zwischenräumen aufrecht erhalten bleibt.

2. Medientransportrohr nach Anspruch 1, dadurch gekennzeichnet, dass die Metallfolie (14) aus Aluminium, rostfreiem Stahl, Kupfer, Blei oder entsprechenden Legierungen besteht.

3. Medientransportrohr nach Anspruch 1 oder 2, dadurch gekennzeichnet, dass das Innenrohr (12) aus Polybuten oder vernetztem Polyäthylen besteht.

4. Medientransportrohr nach einem der Ansprüche 1 - 3, dadurch gekennzeichnet, dass der Kleber (24) aus einem Copolymeren besteht.

5. Medientransportrohr nach Anspruch 4, dadurch gekennzeichnet, dass der Kleber (24), insbesondere bei einem Innenrohr (12) aus Polyäthylen oder vernetztem Polyäthylen, aus einem Aethylen-Acrylsäure-Copolymerisat besteht.

6. Medientransportrohr nach einem der Ansprüche 1 - 5, dadurch gekennzeichnet, dass ein längslaufend ausgebildeter Ueberlappungsbereich (17) der Metallfolie (14) vollflächig mit einem längslaufenden, wenigstens den aussenliegenden Rand (30) der Metallfolie (14) abdeckenden Folienband (32), insbesondere einem metallischen Folienband, verbunden ist.

7. Medientransportrohr nach einem der Ansprüche 1 - 6, dadurch gekennzeichnet, dass eine längslaufend überlappend ausgebildete Metallfolie (14) mit einer zweiten, aussenliegenden Metallfolie (34) vollflächig verklebt oder verschweisst ist, wobei die zweite Metallfolie (34) gegenüber der ersten versetzt ist, vorzugsweise um etwa 180°.

8. Medientransportrohr nach Anspruch 7, dadurch gekennzeichnet, dass ein zweiter Kleber (36) dem Kleber (24) für die innenliegende Metallfolie (14) entspricht.

9. Medientransportrohr nach einem der Ansprüche 1 - 8, dadurch gekennzeichnet, dass das Innenrohr (12) mit der/den Metallfolie/n (14,34) koaxial in eine thermische Isolationsschicht (18) eingebettet und von einem Aussenmantel (20) aus Kunststoff, vorzugsweise mit innenliegender Aluminiumfolie (22) oder einem innenliegenden, gewellten Metallrohr, geschützt ist.

10. Medientransportrohr nach einem der Ansprüche 1 - 8, da durch gekennzeichnet, dass das Innenrohr (12) mit der/den Metallfolie/n (14,34) koaxial in einen wenig isolie renden, dünnen Aussenschicht (38), vorzugsweise aus Kunststoff, eingebettet ist.

18
16
17
20
22
10 12 14

Fig.1

Fig. 2

Fig. 3

Fig. 4

Fig.5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A,D P | EP-A-0 296 105 (KABELWERKE BRUGG) * Insgesamt * --- | 1-3 | F 16 L 11/12 F 16 L 59/153 |
| A,D | EP-A-0 270 347 (HANDY & HARMAN) * Figuren; Seite 3, Zeilen 21-58 * --- | 1-2,4-5 ,9-10 | |
| A | GB-A-2 200 427 (FLEXADUX) * Figuren; Zusammenfassung * --- | 6 | |
| A | DE-A-3 104 161 (SIEMENS AG) * Figuren; Ansprüche * --- | 1,5-6,9 -10 | |
| A,D | EP-A-0 084 088 (FELTEN & GUILLEAUME) * Figur; Ansprüche * ----- | 1-3,9- 10 | |

RECHERCHIERTE SACHGEBIETE (Int. Cl.5)

F 16 L

Der vorliegende Recherchenbericht wurde für alle Patentansprüche erstellt

| Recherchenort | Abschlußdatum der Recherche | Prüfer |
|---|---|---|
| DEN HAAG | 15-03-1990 | NARMINIO A. |

EPO FORM 1503 03.82 (P0403)

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
...............................................................
& : Mitglied der gleichen Patentfamilie, übereinstimmendes
    Dokument